# EUROPEAN PATENT APPLICATION

(11) **EP 1 850 570 A1**
(43) Date of publication of application: **31.10.2007**
(21) Application number: 07007056.0
(22) Date of filing: 04.04.2007
(51) Int. Cl.: H04M 1/725, G06F 3/023

(54) **Method and apparatus for writing messages in mobile communication terminal**

(30) Priority: 24.04.2006 KR 20060036528
(71) Applicant: Samsung Electronics Co., Ltd., Yeongtong-gu Suwon-si, Gyeonggi-do (KR)
(72) Inventor: Kim, Young-Moon, Seongnam-si Gyeonggi-do (KR)
(74) Representative: Boakes, Jason Carrington

(57) **Abstract**

Provided is a method and apparatus of writing a message in a mobile communication terminal. The method includes checking whether a button input has been made during an idle state. A number string for a dialing according to the button input and a character string for writing the message on a main screen are simultaneously displayed, when the button input has been made. The short messaging mode can be easily and quickly accessed and used.

## Description

The present invention relates generally to a method and an apparatus for writing a message in a mobile communication terminal, and more particularly, but not exclusively, to a method and an apparatus for readily changing to a message writing mode that allows quick and easy entering of messages into the mobile communication terminal.

Recently, with new developments in telecommunication technology and functions in mobile communication terminals, the use of mobile communication systems is rapidly proliferating. Modem mobile communication terminals have digital cameras, MP3 playback capability, phone directories, short messaging services (SMS), and various other functions.

The popularity of the SMS function has surged among mobile communication terminal users, and has thus become a mainstay function along with voice communication. Teens and youths in particular tend to favor the SMS function over voice recorded messages as a mode of expression.

When an SMS message is sent in a mobile communication terminal, an SMS hot key or a menu (in which the SMS mode is entered in several stages, after which the message is entered and sent) is used.

As described above, in order for a user to use the SMS function, he /she must endure the inconvenience of having to first perform a multi-stage manipulation of keys before being able to compose and send a message. As use of the SMS function has recently become widespread, methods for conveniently and quickly being able to access and use the SMS function are needed.

It is an aim of the present invention to at least partly mitigate the above-mentioned problems.

An aim of embodiments of the present invention is to substantially solve at least the above problems and/or disadvantages and to provide at least the advantages below. Accordingly, an aim of embodiments of the present invention is to provide a method for using an SMS function in a mobile communication terminal.

Another aim of embodiments of the present invention is to provide a method for reducing the number of button inputs required to enter a message writing mode in a mobile communication terminal.

A further aim of embodiments of the present invention is to provide a method for composing an SMS message in a mobile communication terminal, in which a dialing number input window or a message checking window and a message writing window are displayed simultaneously upon a button entry.

According to a first aspect of the present invention, there is provided a method of writing a message in a mobile communication terminal, including checking whether a predetermined button input has been pressed during an idle state; and simultaneously displaying a number string for dialing according to the predetermined button input and a character string for writing the message on a main screen, when the predetermined button input has been pressed.

According to a second aspect of the present invention, there is provided method of writing a message in a mobile communication terminal, including checking whether a predetermined button input has been pressed during a checking of a received message; and simultaneously displaying the received message and a character string for writing a message according to the predetermined button input on a main screen, when the predetermined button input has been pressed.

According to a third aspect of the present invention there is provided a mobile communication terminal for writing a message comprising:
a controller for checking whether an input has been made during an idle state and simultaneously outputting a number string for a dialing according to the button input and a character string for writing the message on a main screen, when the input has been made; and
a display unit for displaying the number string and the character string.

According to a fourth aspect of the present invention there is provided a mobile communication terminal for writing a message comprising:
a controller for checking whether an input has been made during a checking of a received message, and simultaneously outputting the received message and a character string for writing a message according to the button input on a main screen, when the input has been made; and
a display unit for displaying the received message and the character string for writing the message.

The above and other objects, features and advantages of the present invention will become more apparent from the following detailed description, given by way of example only, when taken in conjunction with the accompanying drawings in which:
FIG. 1 is a block diagram of the configuration of a mobile communication terminal to which the present invention is applied;
FIG. 2 is a flowchart showing the process of displaying a message writing mode from a standby mode, according to a first embodiment of the present invention;
FIG. 3 is a flowchart showing the process of displaying a message writing mode from a standby mode, according to a second embodiment of the present invention;
FIG. 4 is a flowchart showing the process of displaying a message writing mode from a message checking mode, according to the present invention;
FIGs. 5A through 5D show screen layouts from a standby mode to a message writing mode, according to the present invention; and
FIGs. 6A through 6C show screen layouts from a message checking mode to a message writing mode, according to the present invention.

Preferred embodiments of the present invention will be described herein below with reference to the accompanying drawings. In the following description, well-known functions or constructions are not described in detail since they would obscure the invention in unnecessary detail.

Described hereinafter is a method for reducing the number of button inputs needed to reach a message writing mode for an SMS function of a mobile communication terminal. In other words, while in standby mode or in an inbox (received) message checking mode, when a certain button input is entered, a dialed number inputting window or a message writing window are simultaneously displayed, so that the message writing mode may be easily accessed.

In the description below, inputting a dialing number refers to inputting numbers using buttons in order to dial a number, and inputting a message refers to inputting characters using buttons to compose an SMS message.

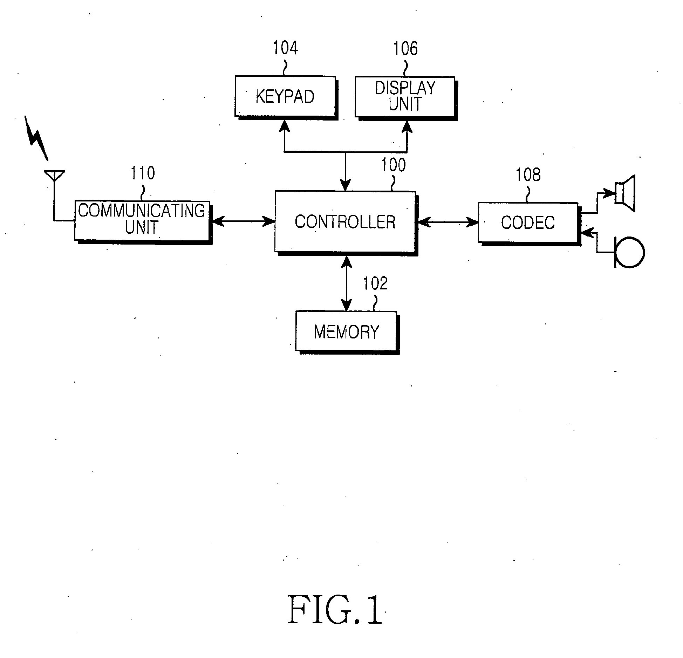

FIG. 1 is a block diagram of the configuration of a mobile communication terminal to which the present invention is applied. In the following description, the mobile communication terminal refers to a cellular phone, a Personal Communication System (PCS) phone, a Personal Data Assistant (PDA), an International Mobile Telecommunication-2000 (IMT-2000) terminal, and all other terminal types. The below description will be made referring to terminals with the general configuration of the above-described terminals.

Referring to FIG. 1, a mobile communication terminal includes a controller 100, a memory 102, a keypad 104, a display unit 106, a coder-decoder (CODEC) 108, and a communicating unit 110.

The controller 100 performs the overall operations of the mobile communication terminal. For instance, it performs processing and controlling of audio communication and data communication, and further performs the functions of displaying an inputting mode and switching modes according to the present invention. Here, the inputting mode includes a number dialing mode, a message writing mode, and a number dialing and message writing mode.

The memory 102 stores programs for controlling the overall operation of the mobile communication terminal, temporary data that arises during the operation of the device, system parameters, and other data for storage (i.e., SMS messages).

The keypad 104 consists of number keys/buttons and a plurality of function keys/buttons including a dial button, directional buttons, an OK button, etc. When a user presses a key, its corresponding input signal is sent to the controller 100. The display unit 106 displays operating information during the operation of the mobile communication terminal, numerals and characters that have been entered by the user, various moving images and still images, etc. In the present invention, the display unit 106 especially displays dialed numbers and inputmessages in the inputting mode. For example, while in a standby mode, when the user makes a button input, the dialed number inputting window and the message writing window are simultaneously displayed by the controller 100. Also, the operation is performed the same way in the message checking mode.

The audio CODEC 108 connected to the controller 100, and the speaker and microphone connected to the CODEC 108 form an audio input/output block for voice communication.

The communicating unit 110 processes Radio Frequency (RF) signals transmitted and received through an antenna.

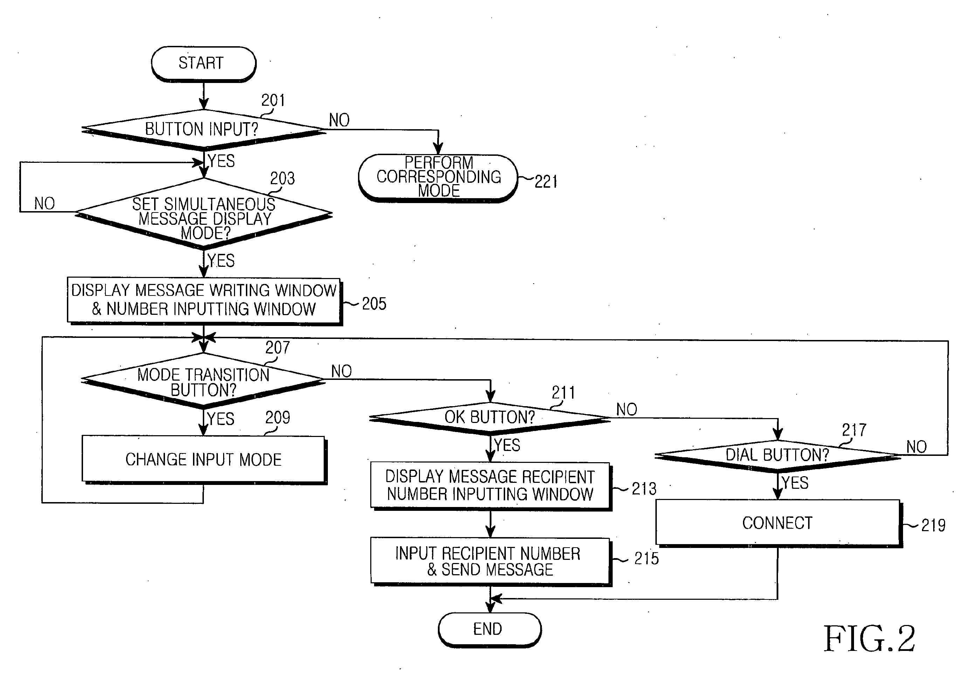

FIG. 2 is a flowchart showing the process of displaying a message writing mode from a standby mode, according to a first embodiment of the present invention.

Referring to FIG. 2, the controller 100 determines in step 201 if a user inputs a command using the buttons while the mobile communication terminal is in an idle state (shown in FIG. 5A). Here, the buttons referred to are those in a 4 X 3 grid.

When there is no button input, the controller 100 performs a corresponding function (e.g., standby mode) in step 221.

When a button input is detected, the controller 100 determines if a simultaneous display mode of a message is set in step 203. Here, the simultaneous message display mode is entered based on whether the user's settings have specified the mode. Also, the simultaneous message display mode signifies an inputting mode that displays input numbers and rows of characters on the display unit 106 at the same time. That is, the dialed number inputting window and the message writing window are displayed by the display unit 106 at the same time, so that rows of dialed numbers and input message characters are displayed simultaneously.

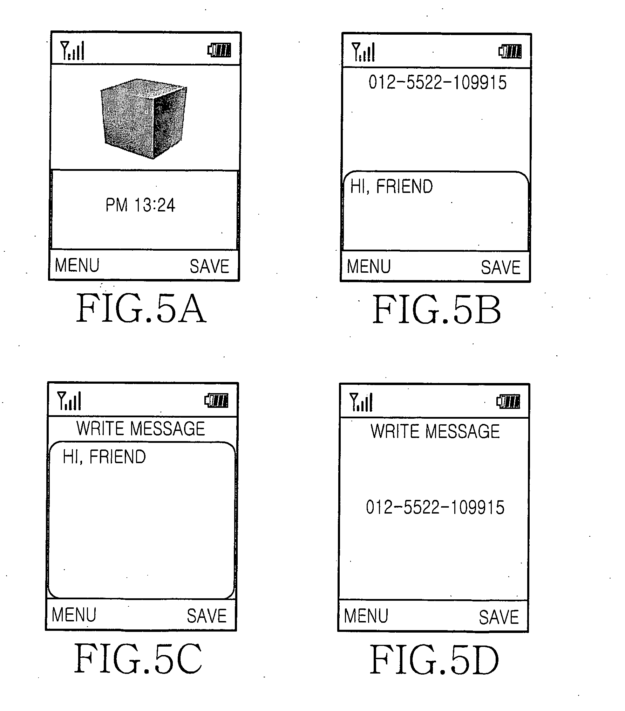

When it is detected that the simultaneous message display mode has been specified, the controller 100 displays a dialed number inputting window together with the message writing window on the display unit 106, and simultaneously displays the numbers and letters input through pressing the buttons. For example, referring to FIG. 5B, numbers dialed using the buttons are displayed in the dialed number input window, and characters for a message inputted through the buttons are displayed in the rows designated for messaging.

Then, the controller 100 determines in step 207 if one of the mode transition buttons has been pressed. Here, the transition buttons signify certain buttons for transitioning to the inputting mode.

If one of the transition buttons has been pressed, the controller 100 changes the inputting window displayed on the display unit 106 to a message writing window in step 209 to receive an input message. For example, as shown in FIG. 5B, when a mode transition button input is entered while both a dialed number inputting window and a message writing window are displayed on the display unit 106, the dialed number inputting window displayed on the display unit 106 is replaced by the message writing window, as shown in FIG. 5C.

Thereafter, the controller returns to step 207 to again determine if one of the transition buttons for changing modes has been pressed. That is, it is determined if the transition buttons have been pressed to transition to inputting mode. For example, as shown in FIG. 5B, when a transition button is pressed during the simultaneous displaying on the display unit 106 of the dialed number inputting window and the message writing window, the message writing mode, that is, the input window displayed on the display unit 106 is set as the message writing window, as shown in FIG. 5C. Then, when a mode transition button is pressed again, the dialed number input mode is set - that is, the dialed number inputting window is set on the display unit 106, as shown in FIG. 5D. Additionally, when a mode transition button is pressed once more when the dialed number inputting window is set on the display unit 106, the dialed number inputting window and the message writing window appear on the display unit 106 simultaneously, as shown in FIG. 5B.

If the mode transition button is not pressed in step 207, the controller 100 determines in step 211 if the OK button is pressed. If the OK button is pressed, the controller 100 displays a window for inputting the number of a message recipient on the display unit 106 in step 213. For example, as shown in FIGS. 5B and 5C, when the OK button is pressed when the message writing window is displayed, the window for inputting the number of a recipient for the message that was drafted in the message writing window is displayed.

Then, after the recipient's number is entered in the displayed window for entering the number of the recipient of the written message, the controller 100 sends the message in step 215.

If the OK button is not pressed in step 211, the controller 100 determines whether the dial button is pressed in step 217.

If the dial button is not pressed, the controller 100 returns to step 207. If the dial button is pressed, the controller 100 attempts to connect a call using the dialed number displayed on the display unit 106 in step 219. That is, as shown in FIGS. 5B and 5D, when the dial button is pressed while a dialed number is displayed in the dialed number inputting window, the controller 100 attempts to connect a call using the displayed dialed number. Next, the controller ends the main process.

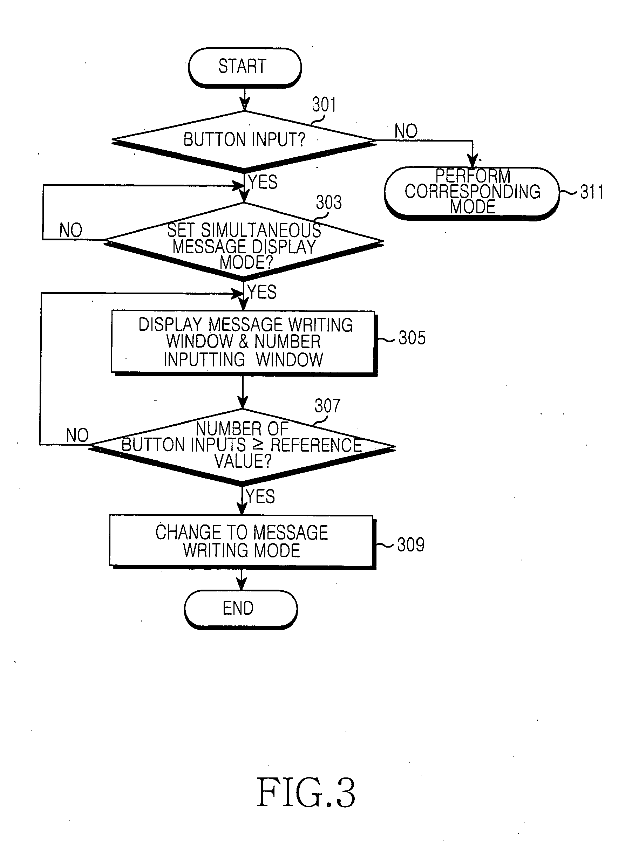

FIG. 3 is a flowchart showing the process of displaying a message writing mode from a standby mode, according to a second embodiment of the present invention.

Referring to FIG. 3, the controller 100 determines in step 301 if a button is pressed by the user while the mobile communication terminal is in an idle state, as shown in FIG. 5A. Here, the buttons are those in the 4 X 3 grid.

If it is determined that no button was pressed, the controller 100 performs a corresponding mode (for example, a standby mode) in step 311.

If it is determined that a button was pressed, the controller 100 determines whether the simultaneous message display mode was set in step 303. That is, it is determined whether the user set the simultaneous message display mode. Also, the simultaneous message display mode simultaneously displays the dialed numbers and the message inputted in rows on the display unit 106 according to button inputs. That is, the dialed number inputting window and the message writing window are simultaneously displayed on the display unit 106.

When it is detected that the simultaneous message display mode has been set, the controller 100 simultaneously displays a dialed number inputting window together with a message writing window on the display unit 106 in step 305. Here, referring to FIG. 5B, numbers dialed using the buttons are displayed in the dialed number inputting window, and characters for a message inputted through the buttons are displayed in rows in the message writing window.

Then, the controller 100 checks the number of button inputs made and compares the number to a preset reference value in step 307. For example, the preset reference value can be set as 13 figures when an international call dialing restriction has been set on the mobile communication terminal, since no dialed number (other than an international number) would exceed 13 figures.

When the number of button inputs is less than the reference value (number of button inputs < reference value), then the controller 100 returns to step 305, where button inputs are continuously received with the message writing window and the dialed number inputting window being simultaneously displayed.

When the number of button inputs is greater than or equal to the reference value (number of button inputs ≥ reference value), then the controller 100 sets the input mode in the display unit 106 as the message writing mode, e.g., the message writing window, in step 309. Here, when the cancel button is pressed, the input mode displayed on the display unit 106 is changed to the dialed number inputting window. Then, the controller 100 ends the main process.

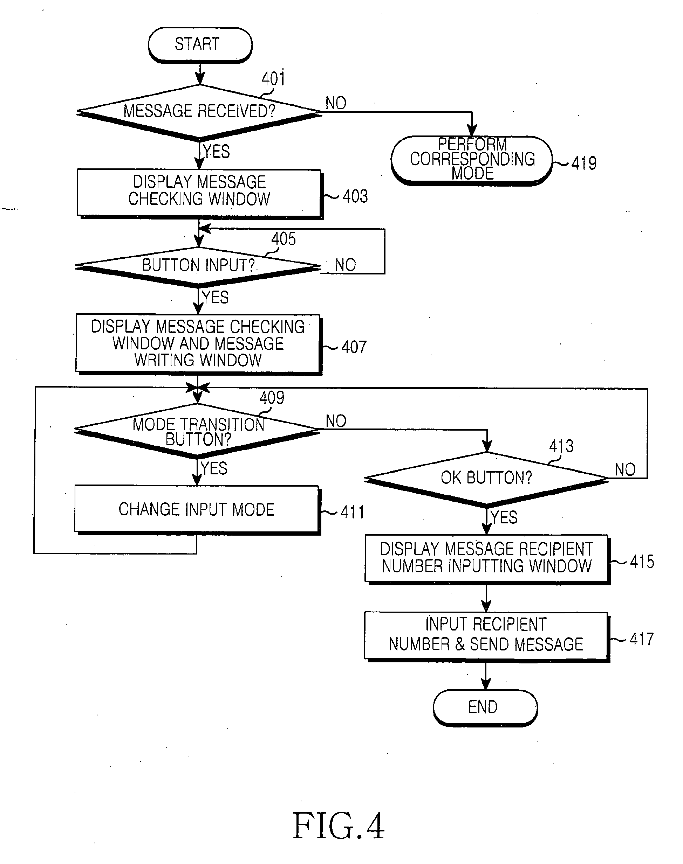

FIG. 4 is a flowchart showing the process of displaying a message writing mode from a message checking mode, according to the present invention.

Referring to FIG. 4, first the controller 100 determines if a message is received in step 401. If a message has not been received, the controller skips to step 419 to a corresponding mode (for example, a standby mode).

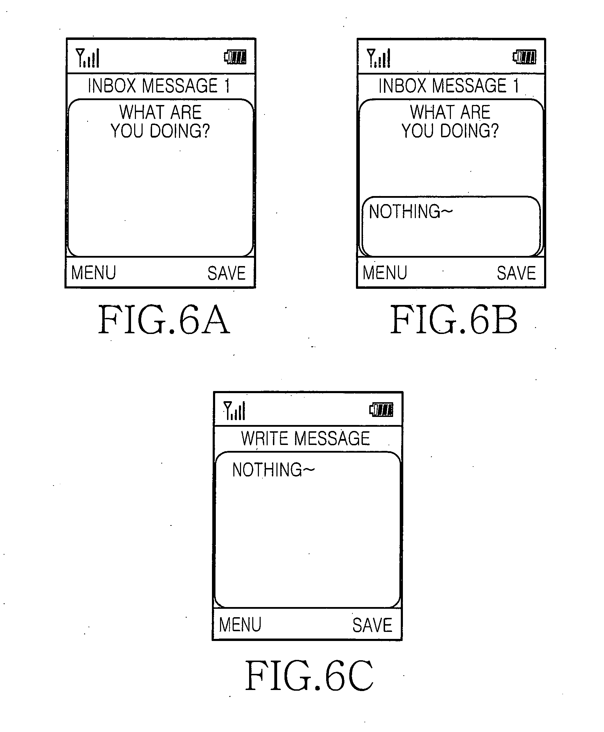

If a message has been received, the controller 100 displays a message checking window for the message to be checked on the display unit 106 in step 403. For example, a message checking window like that shown in FIG. 6A is used to display a received message on the display unit 106.

Then, the controller 100 determines whether the user has made an input using the buttons in step 405. Here, the buttons refer to those in the 4 X 3 grid.

If it is determined that a button input has been made, in step 407 the controller 100 simultaneously displays a message checking window and a message writing window on the display unit 106, so that the received message and a message entered using the buttons can be displayed at the same time. For example, as shown in FIG. 6B, a received message may be displayed in the message checking window, and a message entered using the buttons may be displayed in the message writing window.

Thereafter, the controller determines whether a mode transition button input is entered in step 409. Here, the mode transition button signifies a certain button for quickly transitioning to the inputting mode.

If the transition button has been pressed, the controller 100 changes the inputting window displayed on the display unit 106 to a message writing window in step 411 to receive an input message. For example, as shown in FIG. 6B, when the mode transition button input is entered while both a message checking window and a message writing window are displayed on the display unit 106, the input window displayed on the display unit 106 is replaced by the message writing window, as shown in FIG. 6C.

Thereafter, the controller returns to step 409 to determine if the transition button for changing modes has been pressed. That is, it is again determined if the transition button has been pressed to transition to inputting mode. For example, as shown in FIG. 6B, when the transition button is pressed during the simultaneous displaying on the display unit 106 of the message checking window and the message writing window, the message writing mode, that is, the input window displayed on the display unit 106 is set as the message writing window, as shown in FIG. 6C. Then, when the mode transition button is pressed again, the message checking mode is set, that is, the message checking window is set on the display unit 106, as shown in FIG. 6A.

If the mode transition button is not pressed in step 409, the controller 100 determines in step 413 if the OK button is pressed. If the OK button is pressed, the controller 100 displays a window for inputting the number of a message recipient on the display unit 106 in step 415. For example, as shown in FIGS. 6B and 6C, when the OK button is pressed when the message writing window is displayed, the window for inputting the number of a recipient for the message that was drafted in the message writing window is displayed.

Then, after the recipient's number is entered in the displayed window for entering the number of the recipient of the written message, the controller 100 sends the message in step 417. Then, the controller 100 ends the main process.

As described above, when button inputs are made during a standby mode or a message checking mode (using the 4 X 3 grid buttons, for example), a dialed number inputting window or a message checking window, and an SMS message writing window are simultaneously displayed, so that the SMS mode can be easily and quickly accessed and used.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method of writing a message in a mobile communication terminal, comprising the steps of:
checking whether a button input has been made during an idle state; and
simultaneously displaying a number string for a dialing according to the button input and a character string for writing the message on a main screen, when the button input has been made.

2. The method of claim 1, wherein the simultaneous displaying step of the number string and the character string comprises :
simultaneously displaying a dialed number inputting window for the dialing and a message writing window on the main screen; and
displaying the number string and the character string in the dialed number inputting window and the message writing window, respectively.

3. The method of claim 1, further comprising :
checking whether a first button for changing an inputting mode is pressed during the simultaneous displaying of the number string and the character string; and
displaying a message inputting window for inputting the character string on the main screen when the first button has been pressed.

4. The method of claim 3, further comprising :
changing the main screen to a number inputting window for inputting the number string, when the message inputting window is displayed on the main screen when the first button has been pressed; and
simultaneously displaying the number string and the character string when the first button is pressed again.

5. The method of claim 1, further comprising displaying a recipient number inputting window for sending the displayed character string, when an OK button is pressed during the simultaneous displaying of the number string and the character string.

6. The method of claim 1, further comprising performing a connecting of the displayed number string, when a dial button is pressed during the simultaneous displaying of the number string and the character string.

7. The method of claim 1, further comprising :
checking a number of times of the button input;
comparing the number of times of the button input with a reference value; and
displaying a message writing window for inputting the message column on the main screen, when the number of times of the button input is greater than or equal to the reference value.

8. The method of claim 7, further comprising performing continued button inputting when the number of times of the button input is less than the reference value.

9. A method of writing a message in a mobile communication terminal, comprising the steps of:
checking whether a button input has been made during a checking of a received message; and
simultaneously displaying the received message and a character string for writing a message according to the button input on a main screen, when the button input has been made.

10. The method of claim 9, wherein the simultaneous displaying step of the received message and the character string comprises :
simultaneously displaying a message checking window for the received message and a message writing window on the main screen; and
displaying the received message and the character string in the message checking window and the message writing window, respectively.

11. The method of claim 9, further comprising :
checking whether a first button for changing an inputting mode is pressed during the simultaneous displaying of the received message and the character string; and
displaying a message inputting window for inputting the character string on the main screen, when the first button has been pressed.

12. The method of claim 11, further comprising :
displaying the main screen at a message checking window for the received message, when the message inputting window is displayed on the main screen when the first button has been pressed; and
simultaneously displaying the received message and the character string when the first button is pressed again.

13. The method of claim 9, further comprising displaying a recipient number inputting window for sending the displayed character string, when an OK button is pressed during the simultaneous displaying of the received message and the character string.

14. A mobile communication terminal for writing a message comprising:
a controller for checking whether an input has been made during an idle state and simultaneously outputting a number string for a dialing according to the button input and a character string for writing the message on a main screen, when the input has been made; and
a display unit for displaying the number string and the character string.

15. The mobile communication terminal of claim 14, wherein the controller performs, as a simultaneous displaying step of the number string and the character string, the steps of simultaneously displaying a dialed number inputting window for the dialing and a message writing window on the main screen, and displaying the number string and the character string in the dialed number inputting window and the message writing window, respectively.

16. The mobile communication terminal of claim 14, wherein the controller further performs the steps of checking whether a first button for changing an inputting mode is pressed during the simultaneous displaying of the number string and the character string, and displaying a message inputting window for inputting the character string on the main screen when the first button has been pressed.

17. The mobile communication terminal of claim 16, wherein the controller further performs the steps of changing the main screen to a number inputting window for inputting the number string, when the message inputting window is displayed on the main screen when the first button has been pressed, and simultaneously displaying the number string and the character string when the first button is pressed again.

18. A mobile communication terminal for writing a message comprising:
a controller for checking whether an input has been made during a checking of a received message, and simultaneously outputting the received message and a character string for writing a message according to the button input on a main screen, when the input has been made; and
a display unit for displaying the received message and the character string for writing the message.

19. The mobile communication terminal of claim 18, wherein the controller further performs the steps checking whether a first button for changing an inputting mode is pressed during the simultaneous displaying of the received message and the character string; and displaying a message inputting window for inputting the character string on the main screen, when the first button has been pressed.

20. The mobile communication terminal of claim 19, wherein the controller further performs the steps displaying the main screen at a message checking window for the received message, when the message inputting window is displayed on the main screen when the first button has been pressed and simultaneously displaying the received message and the character string when the first button is pressed again.
